# EUROPÄISCHE PATENTSCHRIFT

(11) **EP 3 004 631 B1**
(45) Veröffentlichungstag und Bekanntmachung des Hinweises auf die Patenterteilung: **16.05.2018**
(21) Anmeldenummer: 14726162.2
(22) Anmeldetag: 26.05.2014
(51) Int. Cl.: F03B 15/18, F03B 17/06

(54) **UNTERWASSER-STRÖMUNGSKRAFTWERK**
UNDERWATER HYDRAULIC POWER PLANT
HYDROLIENNE SOUS-MARINE

(30) Priorität: 29.05.2013 DE 102013009122
(43) Veröffentlichungstag der Anmeldung: 13.04.2016
(73) Patentinhaber: Voith Patent GmbH, 89522 Heidenheim (DE)
(72) Erfinder: SOMMERKORN, Klaus, 89518 Heidenheim (DE)
(74) Vertreter: Dr. Weitzel & Partner
(86) Internationale Anmeldenummer: PCT/EP2014/060761
(87) Internationale Veröffentlichungsnummer: WO 2014/202334

(56) Entgegenhaltungen:
- EP-A1- 2 241 749
- US-A1- 2003 151 260
- US-A1- 2006 033 338

## Beschreibung

Die Erfindung betrifft ein Strömungskraftwerk für den Offshore- oder Onshore-Betrieb, somit in Meeren oder in Flüssen, umfassend als wesentliche Bauteile eine Wasserturbine, einen mit dieser in Triebverbindung stehenden Generator sowie eine auf dem Gewässerboden stehende oder schwimmende Tragkonstruktion. Turbine und Generator befinden sich in einem torpedoförmigen Gehäuse. Auf DE 10 2013 001 212, US 2006 / 033 338 sowie DE 10 2012 025 127 wird verwiesen.

Ein solches Kraftwerk umfasst als wesentliche Bauteile eine Wasserturbine sowie einen elektrischen Generator - beide im Folgenden "Energieeinheit" genannt. Sie sind miteinander drehfest verbunden, meist dadurch, dass ihre Rotoren auf ein und derselben Antriebswelle sitzen, umgeben von einem Gehäuse. Turbine, Generator und Gehäuse bilden die sogenannte Gondel. Diese ist von einer Tragkonstruktion getragen, die ihrerseits auf dem Gewässerboden steht, beispielsweise auf dem Meeresboden. Auch hier kann die Tragkonstruktion schwimmen. Sie kann im Boden mehrere Meter tief eingelassen sein. Auch gibt es Schwergewichtskonstruktionen, zum Beispiel aus Beton, die kein Anbohren des Bodens verlangen. Die Tragkonstruktion kann aus einem Pfahl bestehen.

Anlagen zum Erzeugen von Energie aus Meeresströmungen können aus einer Mehrzahl von Strömungskraftwerken der genannten Bauart gebildet sein. Solche Anlagen weisen verschiedene Arten der Automatisierung und Steuerung auf. Üblich sind Automatisierungen, die nach Sollgrößen betrieben werden. Die folgenden Sollgrößen kommen in Betracht: Die Geschwindigkeit der Meeresströmung, die maximierte Momentanleistung oder die Drehzahl oder das Drehmoment der Energieeinheit. Dabei beruht die Automatisierung stets auf einer Regelung von Momentanwerten. Es werden somit Werte der genannten Sollgrößen erfasst, und augenblicklich so verwendet, wie sie sind.

Die Gesamt-Meeresenergie kommt zustande durch die folgenden Kräfte:
(1) Kräfte durch die Grundströmung. Dies ist die Tidenströmung des Meeres landeinwärts oder landauswärts. Dabei verläuft die Strömung im Wesentlichen in ein und derselben Richtung.
(2) Kräfte zufolge Turbulenz. Die Turbulenz geht zurück auf Abweichungen von der Hauptströmungsrichtung. Sie ist an verschiedenen Orten verschieden. Sie variiert zeitlich.
(3) Kräfte zufolge der Wellenbewegungen. Dies geht auf ein Bewegen der einzelnen Welle zurück. Einzelne Wasserteilchen führen dabei eine Kreisbewegung aus und erzeugen Komponenten in vertikaler wie auch in horizontaler Richtung.

Die Kräfte zu (1) und zu (2) hängen zwar jeweils vom Standort ab. Sie sind jedoch relativ zueinander weitgehend konstant.

Die Gesamtbelastung eines Strömungskraftwerkes und damit einer Anlage aus mehreren Strömungskraftwerken ist eine Kombination aus den Kräften zu (1), (2) und (3). Die Gesamtlast ist eine wichtige Größe, da das einzelne Strömungskraftwerk beziehungsweise eine Anlage vor Erreichen einer Höchstlast abgeschaltet werden muss.

Die genannten lokalen Änderungen des Energieaufkommens und damit der auftretenden Kräfte können auch auf andere zyklische Effekte als die oben beschriebenen zurückgehen, zum Beispiel auf Wirbel, die durch Ablösungen von Widerständen im Tidenstrom erzeugt werden. Dies tritt beispielsweise bei Inseln auf. Auch hier lassen sich Prognosen wie bei Wellenbewegungen erzeugen, entweder durch direkte oder indirekte Messung.

Am wichtigsten sind noch die Kräfte zu (3). Diese haben einen signifikanten Einfluss auf die Gesamtlast, die auf die Turbine wirkt.

Bisher bemühte man sich, die genannten Kräfte zu erfassen, um eine Überlastung der Anlage durch eine quasi statische Veränderung der Drehzahl der Energieeinheit und damit eine Überlastung zu vermeiden. Dies wurde bisher jedoch nicht im gewünschten Ausmaß erreicht.

Der Erfindung liegt daher die Aufgabe zugrunde, ein Strömungskraftwerk der genannten Bauart derart zu gestalten, dass Überlastzustände vermieden werden.

Diese Aufgabe wird durch die Merkmale von Anspruch 1 gelöst.

Der Grundgedanke der Erfindung beruht darauf, dass es nicht genügt, die genannten Kräfte zu erfassen und zum selben Zeitpunkt auch zur Regelung der Energieeinheit zu nutzen. Vielmehr schlägt der Erfinder vor, aus dem zu einem Zeitpunkt t₁ oder davor herrschenden Kräften eine Prognose bezüglich jener Kräfte zu erstellen, die zu einem künftigen Zeitpunkt t₂ auftreten werden. Es wird somit eine Prognose bezüglich eines künftigen Energieangebotes erstellt, das zu einem Zeitpunkt t₂ herrschen wird. Damit erhält man zugleich eine Angabe über die zu erwartenden, auf die Turbine wirkenden Kräfte.

Ferner schlägt der Erfinder einen Regler vor, um die Drehzahl der gemeinsamen Antriebswelle rechtzeitig vor dem genannten Zeitpunkt t₂ auf einen Wert einzuregeln, sodass die daraus resultierenden Lasten auf zulässigen Werten gehalten werden.

Die Kräfte zu (1) folgen einem vorhersehbaren Tidenzyklus. Die Kräfte zu (2) stehen üblicherweise in Relation zu diesem Zyklus und hängen hiervon ab. Die Kräfte zu (3) sind hiervon - wie oben erwähnt - vollkommen unabhängig. Zwar sind die Amplituden von Wellenkräften nicht vorhersehbar, wohl aber in ihrer Relation zueinander, somit von Welle zu Welle. So wird grundsätzlich eine Welle nicht plötzlich ausbleiben, und es wird auch im Allgemeinen eine Welle von übermäßiger Höhe nicht plötzlich auftreten. Auch ist die Periodendauer der Wellen erfahrungsgemäß gleichmäßig. Durch Beobachtung der aktuellen Wellensituation kann daher ein Strömungskraftwerk beziehungsweise eine ganze Anlage vor dem Eintreffen der nächsten Welle in einen Betriebszustand (Drehzahl der Energieeinheit) gefahren werden, derart, dass die Last beim Durchlaufen der nächsten Welle ausgeglichen oder zumindest minimiert wird.

Die aktuelle Last beim Durchlaufen einer Welle wird somit minimiert. Damit wird die Gefahr von Schäden verringert. Einzelne Anlagen können somit als Messposten für den gesamten Energiepark dienen.

Der Wellengang kann derart stark sein, dass konventionelle Strömungskraftwerke wegen der hierdurch auftretenden hohen Kräfte gar nicht mehr betrieben werden können. Durch Anwendung der Erfindung ist es jedoch möglich, Strömungskraftwerke auch noch bei extrem hohen Wellen zu betreiben. Ein erfindungsgemäßes Strömungskraftwerk lässt sich daher während viel größerer Zeiträume nutzen, und muss gegebenenfalls überhaupt nicht mehr abgeschaltet werden. Es bedeutet, dass die Jahres- oder Lebensleistung eines erfindungsgemäßen Strömungskraftwerkes wesentlich höher sein kann, als diejenige eines herkömmlichen Kraftwerkes.

Beispiel für das Betreiben eines erfindungsgemäßen Strömungskraftwerks:

Bei einem Strömungskraftwerk wird die Wellenbewegung erfasst. Diese kann beispielsweise aus der Last- oder Leistungskurve des Kraftwerkes leicht gewonnen werden. Es werden somit zu einem Zeitpunkt t₁ die Daten einer über das Kraftwerk hinweglaufenden Welle erfasst, vor allem die Amplitude der einzelnen Welle sowie die Wellenfrequenz. Hiermit gewinnt man eine Prognose für das Energieangebot und damit für die Kräfte, die auf das Kraftwerk bei Überlaufen der nachfolgenden Welle zu einem Zeitpunkt t₂ herrschen werden.

Rechtzeitig vor Eintreffen der nachfolgenden Welle wird die Drehzahl des Kraftwerkes derart angepasst, dass das durch die nachfolgende Welle erzeugte Energieangebot und die damit verbundenen Kräfte entsprechend verringert werden.

Befindet sich der Scheitelpunkt der nachfolgenden Welle gerade über dem Kraftwerk, beziehungsweise hat das Kraftwerk auch bereits ein wenig überschritten, so wird die Drehzahl wieder angepasst, und zwar im Hinblick auf das folgende Wellental.

Die Erfindung ist anhand der Zeichnung näher erläutert. Darin ist im Einzelnen folgendes dargestellt:
- Figur 1: zeigt in schematischer Darstellung eine Anlage mit zwei Unterwasser-Strömungskraftwerken.
- Figur 2: veranschaulicht das Zusammenwirken von Energieangebot und einer beispielhaften Drehzahl über der Zeit.

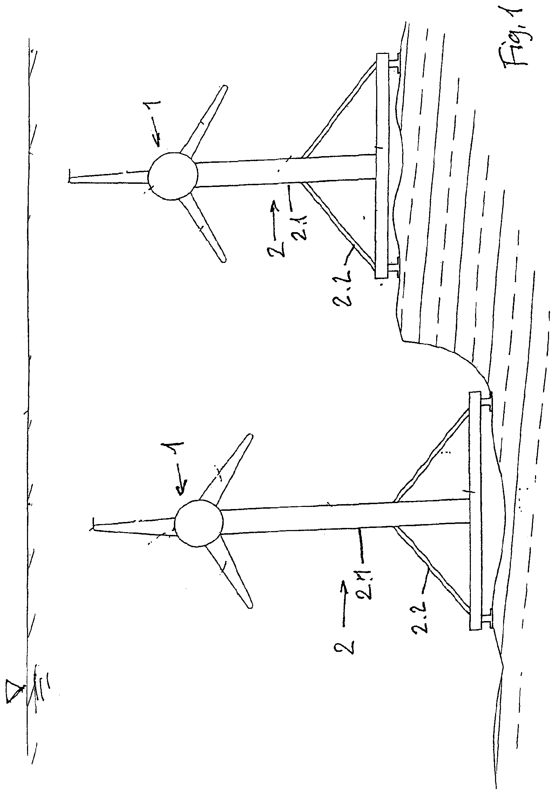

Der in Figur 1 gezeigte Offshore-Energiepark umfasst zwei Strömungskraftwerke gemäß der Erfindung. Die beiden Strömungskraftwerke sind baugleich. Sie umfassen jeweils eine Energieeinheit 1, umfassend eine Turbine sowie einen Generator, der hier nicht gezeigt ist. Turbine und Generator befinden sich in einer torpedoförmigen Gondel.

Auf dem Meeresboden steht jeweils eine Tragkonstruktion 2. Sie kann im Meeresboden durch Einlassen von Pfählen verankert sein. Sie kann aber auch durch entsprechendes Eigengewicht mit dem Meeresboden genügend fest verbunden sein. Die Tragkonstruktion 2 umfasst einen Turm 2.1 sowie Stäbe 2.2.

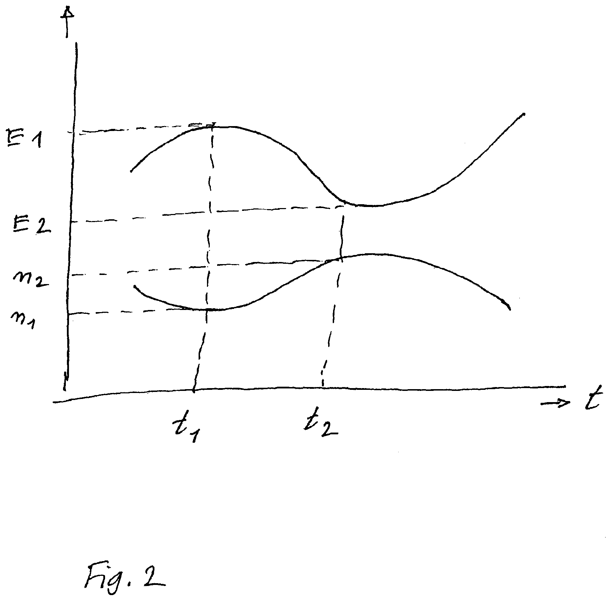

Das in Figur 2 gezeigte Diagramm zeigt den Verlauf des Energieangebotes [E] über der Zeit [t], sowie die Drehzahl [n], wiederum über der Zeit [t].

Wie man sieht, wird die Anlage derart gefahren, dass die Drehzahl der Energieeinheit bei einem Wellenberg ein Minimum aufweist, aber bei einem Wellental ein Maximum.

Läuft eine Welle über das Kraftwerk hinweg, so verändert sich entsprechend der Wellenhöhe die Leistung des Kraftwerkes beziehungsweise der Anlage, da die Kräfte zu (1) und (2) jene gemäß (3) überlagern. Gleiches gilt für die mechanische Last, zum Beispiel in Form von Schubkräften am Fundament. Aus diesen Zeitsignalen (Leistung des Ausgangs, Kräfte am Fundament, separate Strömungsmessung) lassen sich die Wellen quasi "ablesen", und es lässt sich eine Gegensteuerung einleiten.

Die Drehzahl der Energieeinheit lässt sich mittels eines Umrichters in gewünschter Weise beeinflussen.

Die Prognoseeinheit kann einen üblichen Regler umfassen. Sie kann auch den D-Anteil eines PID-Reglers umfassen.

Die Prognoseeinheit kann die Messungen der notwendigen Parameter selbst durchführen, oder es kann ein eigenständiges Messgerät hierzu vorgesehen werden.

### Bezugszeichenliste

- 1: Energieeinheit
- 2: Tragkonstruktion
- 2.1: Turm
- 2.2: Stäbe

## Patentansprüche

1. Strömungskraftwerk zum Erzeugen von Energie aus Meeresströmungen, umfassend die folgenden Merkmale:
1.1 eine Energieeinheit mit einer Turbine und einem Generator, deren Rotoren von einer gemeinsamen Antriebswelle getragen sind, und die auf einem Tragwerk ruht;
1.2 eine Prognoseeinheit, die zu einem ersten Zeitpunkt T1 das zu einem künftigen Zeitpunkt T2 vorliegende Energieangebot E2 prognostiziert
1.3 die Prognoseeinheit enthält eine Einrichtung zum mittelbaren oder unmittelbaren Erfassen der auf das Fundament der Energieeinheit wirkenden Kräfte, und/oder Strömungsmesseinrichtungen hierzu;
1.4 einen Regler zum Einregeln der Drehzahl ₙ₁ der gemeinsamen Antriebswelle zu einem nach dem Zeitpunkt T₁ liegenden Zeitpunkt T₂ auf einen Wert n₂ in Abhängigkeit vom prognostizierten Energieangebot E₂, wobei n₂ bei steigendem prognostizierten Wert des Energieangebotes E₂ abfällt, und bei fallendem prognostizierten Wert des Energieangebotes E₂ ansteigt.

## Claims

1. Hydraulic power plant for generating energy from ocean currents, comprising the following features:
1.1 an energy unit having a turbine and a generator whose rotors are carried by a common drive shaft and which rests on a supporting structure;
1.2 a predicting unit which at a first point in time T1 predicts the energy supply E2 present at a future point in time T2;
1.3 the predicting unit contains a device for the indirect or direct detection of the forces acting on the foundation of the energy unit, and/or flow measuring devices for this purpose;
1.4 a regulator for regulating the speed n₁ of the common drive shaft at a point in time T₂ following the point in time T₁ to a value n₂ depending on the predicted energy supply E2, wherein n₂ decreases with increasing predicted value of the energy supply E2, and increases at falling predicted value of the energy supply E2.

## Revendications

1. Hydrolienne pour la génération d'énergie à partir des courants marins, comprenant les caractéristiques suivantes :
1.1 une unité de génération d'énergie avec une turbine et un générateur, dont les rotors sont portés par un arbre d'entraînement commun et qui repose sur une structure portante ;
1.2 une unité de pronostic qui pronostique, à un premier instant T₁, l'énergie disponible E₂ présente à un instant T₂ dans le futur,
1.3 laquelle unité de pronostic contient une installation pour capter indirectement ou directement les forces agissant sur les fondations de l'unité de génération d'énergie, et/ou des installations de mesure du courant en plus de celle-ci ;
1.4 un régulateur pour régler la vitesse de rotation n₁ de l'arbre d'entraînement commun à un instant T₂ situé après l'instant T₁ à une valeur n₂ en fonction de l'énergie disponible pronostiquée E₂, n₂ diminuant quand la valeur pronostiquée de l'énergie disponible E₂ augmente et augmentant lorsque la valeur pronostiquée de l'énergie disponible E₂ diminue.
